# EUROPEAN PATENT APPLICATION

(11) **EP 3 858 710 A1**
(43) Date of publication of application: **04.08.2021**
(21) Application number: 21154124.8
(22) Date of filing: 28.01.2021
(51) Int. Cl.: B62D 9/00

(54) **STEERING ASSISTANCE**

(30) Priority: 29.01.2020 GB 202001243
(71) Applicant: McLaren Automotive Limited, Woking Surrey GU 21 4YH (GB)
(72) Inventor: PASCALI, Leonardo, Woking, Surrey GU21 4YH (GB); ALTIERI, Leonardo, Woking, Surrey GU21 4YH (GB)
(74) Representative: Slingsby Partners LLP

(57) **Abstract**

A vehicle comprising: a body; a pair of wheels each rotatable about a respective rolling axis and each wheel having a centre of mass; a first power source coupled to a first of the pair of wheels and a second power source coupled to a second pair of wheels, the power sources being coupled to respective wheels to provide torque to that wheel about the respective rolling axis; and a pair of suspension mechanisms, each wheel being attached to the body of the vehicle by a respective suspension mechanism, the suspension mechanism providing the respective wheel with freedom to move relative to the body of the vehicle in steer about a respective steer axis, the steer axis being offset from the centre of mass of the wheel so that when a different amount of torque is applied to each wheel about the rolling axis the difference in torque causes a steering torque on each wheel about the steer axis of the wheel.

## Description

This invention relates to a vehicle having a pair of wheels with a steer axis offset from their respective centre of masses.

Vehicles typically have at least one pair of wheels that can rotate about a steer axis to enable the vehicle to steer and thus change direction. It is becoming increasingly common for vehicles to be capable of altering the steering direction without direct driver input. For instance, to enable a vehicle to drive within the lane markings on a road without deviating outside the lane or to correct driver inputs to keep within the lane markings if the driver has become distracted.

One system for controlling the steering of a vehicle is to use an electric power assisted steering system. Such systems generally have an electric servo that is capable of providing a force to a steering column of the vehicle. In normal use, the electric servo applies force in response to driver input to reduce the force required by the driver in turning a steering wheel. However, if an electric servo of sufficient size is provided then the servo can provide a force that is large enough on its own to move the steering column of the vehicle and provide a steering effect independent of the driver's own input on the steering wheel.

Another system for controlling the steering direction of a vehicle is to use torque vectoring between a pair of wheels located on opposite sides of the vehicle. In this case, one wheel may be driven with higher torque than the other wheel which causes the wheel being driven with higher torque to rotate at a higher speed than the other wheel. This difference in rotational speed causes one wheel to move along its path quicker than the other wheel and, as the wheels are linked together due to their attachment to the vehicle, this causes the vehicle to alter direction. This causes a steering effect that is similar to that of a tank drive style effect on a continuous track vehicle. In this case, the steering effect may be generated without a coinciding movement of the steering wheel. In addition, if electric power steering is not deployed within the vehicle architecture then a means of moving the steering wheel without direct driver input may not be provided.

It would therefore be desirable for there to be an improved system for providing a steering force to the steered wheels of a vehicle.

According to a first aspect of the present invention there is provided a vehicle comprising: a body; a pair of wheels each rotatable about a respective rolling axis and each wheel having a centre of mass; and a pair of suspension mechanisms, each wheel being attached to the body of the vehicle by a respective suspension mechanism, the suspension mechanism providing the respective wheel with freedom to move relative to the body of the vehicle in steer about a respective steer axis, the steer axis being offset from the centre of mass of the wheel so that when a different amount of torque is applied to each wheel about the rolling axis the difference in torque causes a steering torque on each wheel about the steer axis of the wheel.

According to a second aspect of the present invention there is provided a vehicle comprising: a body; a pair of wheels each rotatable about a respective rolling axis and each wheel having a centre of mass; a first power source coupled to a first of the pair of wheels and a second power source coupled to a second pair of wheels, the power sources being coupled to respective wheels to provide torque to that wheel about the respective rolling axis; and a pair of suspension mechanisms, each wheel being attached to the body of the vehicle by a respective suspension mechanism, the suspension mechanism providing the respective wheel with freedom to move relative to the body of the vehicle in steer about a respective steer axis, the steer axis being offset from the centre of mass of the wheel so that when a different amount of torque is applied to each wheel about the rolling axis the difference in torque causes a steering torque on each wheel about the steer axis of the wheel.

The steer axis may be offset from the centre of mass of the wheel in a lateral direction of the vehicle. The steer axis of each wheel may be offset from the centre of mass of the wheel in the lateral direction of the vehicle towards a longitudinal centreline of the vehicle. The steer axis of each wheel may be offset from the centre of mass of the wheel in the lateral direction of the vehicle away from a longitudinal centreline of the vehicle.

The vehicle may comprise a first power source coupled to a first of the pair of wheels and a second power source coupled to a second of the pair of wheels, wherein the power sources may be coupled to respective wheels to provide torque to that wheel about the respective rolling axis. The vehicle may comprise at least one power source control unit configured to control the torque generated by the first and second power sources, the control unit may be configured to cause the first and second power sources to deliver different amounts of torque to each of the pair of wheels to cause the steering torque on each wheel. The power source control unit(s) may be configured to cause the first power source to generate a greater torque than the second power source to cause the pair of wheels to rotate about the steer axis in a first direction. The power source control unit(s) may be configured to cause the second power source to generate a greater torque than the first power source to cause the wheels to cause the pair of wheels to rotate about the steer axis in a second direction opposite to the first direction.

The vehicle may comprise a steering mechanism, wherein the pair of wheels may be coupled together by the steering mechanism, the steering mechanism may link the movement of the pair of wheels about the steer axes of the wheels. The pair of wheels may be located on opposite sides of the vehicle body along a lateral direction of the vehicle. The pair of wheels may be front wheels of the vehicle.

The present invention will now be described by way of example with reference to the accompanying drawings. In the drawings:
Figure 1 shows a schematic plan of a vehicle.
Figure 2 shows a schematic diagram of a pair of wheels and steering mechanism.
Figure 3 shows a schematic view of one wheel and the suspension mechanism for that wheel.

The following description is presented to enable any person skilled in the art to make and use the invention, and is provided in the context of a particular application.

Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The present invention relates to a vehicle comprising a body and a pair of wheels each rotatable about a respective rolling axis and each wheel having a centre of mass. The vehicle further comprises a pair of suspension mechanisms, each wheel being attached to the body of the vehicle by a respective suspension mechanism, the suspension mechanism providing the respective wheel with a degree of freedom to move relative to the body of the vehicle in steer about a respective steer axis, the steer axis being offset from the centre of mass of the wheel so that when a different amount of torque is applied to each wheel about the rolling axis the difference in torque causes a steering torque on each wheel about the steer axis of the wheel.

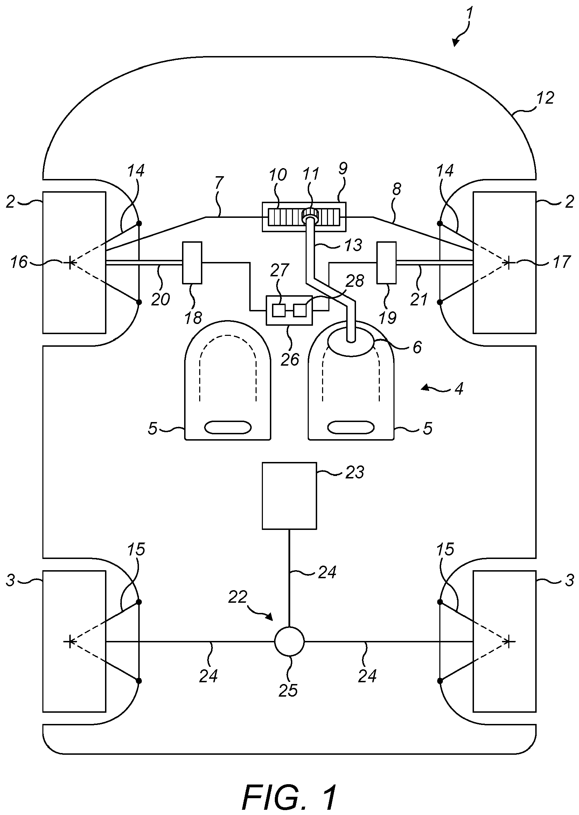

Figure 1 shows a vehicle 1. Figure 1 shows a plan schematic view of the vehicle 1. The vehicle 1 may be an automobile. The vehicle 1 may be a car. The vehicle comprises front wheels 2 and rear wheels 3. The front of the vehicle 1 is defined with reference to the primary motion direction of the vehicle 1. The front of the vehicle 1 points in the primary motion direction of the vehicle. Generally, a vehicle has a primary motion direction that is the forward direction. The vehicle 1 comprises an occupant compartment 4. The occupant compartment 4 may comprise one or more seats 5 for occupants of the vehicle to sit in. The occupant compartment may accommodate a driver. The occupant compartment may accommodate one or more passengers.

The vehicle comprises a vehicle body 12. The vehicle body 12 generally comprises a plurality of body panels together with the underlying structure that supports components of the vehicle 1.

The wheels 2, 3 are mounted on hub carriers. Each wheel can rotate relative to its respective hub carrier about a generally horizontal axis. This rotation axis may be known as the respective rolling axis of the respective wheel 2, 3. The wheels rotate about their respective rolling axes as the vehicle moves along a surface such as the ground due to the wheels contacting the ground and supporting the body of the vehicle against the ground. Each hub carrier is mounted to the body 12 of the vehicle 1 by a suspension mechanism indicated generally at 14, 15. At least some of the wheels may be steerable wheels. The vehicle may comprise a pair of steerable wheels. In figure 1, the steerable wheels are shown as the front wheels 2. The suspension mechanisms 14 of the steerable wheels 2 are mounted to the hub carriers in such a way that each hub carrier can rotate about a respective steer axis 16, 17. This thus causes the rolling axis of the wheel that is being steered to rotate about the steer axis.

The vehicle may comprise controls located within the occupant compartment 4 to enable an occupant to control the motion of the vehicle 1. One of those controls may be a steering wheel 6. The steering attitude of the wheels 2 is controlled by track rods 7, 8. The steering of the vehicle is controlled by a steering mechanism that may be a rack mechanism. The rack mechanism comprises a rack body 9, a steering rack 10 and a pinion 11. The rack body 9 may be fastened to the body 12 of the vehicle 1. The steering rack 10 is a toothed bar which is held captive in the rack body 9 in such a way that the rack is only free to translate relative to the rack body transversely across the vehicle. The pinion 11 is mounted within the rack body in such a way that it engages with the steering rack 10. A steering shaft 13 connects the pinion 11 to the steering wheel 6 so that when a driver turns the steering wheel 6 the pinion 11 rotates and causes the rack 10 to translate relative to the body 12 of the vehicle 1. The track rods 7, 8 run between the steering rack 10 and the hub carriers of the wheels 2. Each track rod is mounted to its respective hub carrier at a point offset from the hub carrier's steer axis 16, 17. In this way when the driver turns the steering wheel the wheels 2 rotate about their steer axis.

At least some of the wheels 2, 3 may be driven wheels and some of those wheels may be non-driven wheels. As shown in figure 1, the steerable wheels 2 are driven wheels. These may be the front wheels 2 as shown in figure 1. The rear wheels 3 are also shown as being driven wheels in figure 1. However, it will be appreciated based on the discussion herein that this is optional. Each steerable wheel is driven by a separate power source.

As shown in figure 1, a first steerable wheel is driven by a first power source 18 and a second steerable wheel is driven by a second power source 19. In this way, the first power source 18 is coupled to the first steerable wheel for the transference of torque generated by the first power source 18 to the first steerable wheel 2. Similarly, the second power source 19 is coupled to the second steerable wheel for the transference of torque generated by the second power source to the second steerable wheel 2. The first and second power sources 18, 19 are connected to their respective wheel by a drive shaft 20, 21. The drive shafts 20, 21 may be connected to the respective wheel by a flexible joint, such as a constant velocity (CV) joint, to enable drive to be transmitted to the steerable wheels at all angles of steer. Each of the first and second power sources comprise a drive shaft and the power sources are configured to impart torque to the drive shafts to rotate about their respective axial directions. The rotation of these drive shafts transmit torque to the wheel to which they are coupled generating rotatation of the wheel. The first and second power sources may be electric motors configured to provide a drive torque and/or receive a drive torque.

The first and second power sources may be separate power sources that generate drive torques separately. Whilst figure 1 shows the first and second power sources as being separately packaged components, they may be joined together and formed as one package. The first and second power sources may be one combined power source that comprises a gearing system to provide two separate drive outputs that form the first and second power sources. The gearing system may be capable of providing different torques to each of the drive outputs. The gearing system may be a differential. The combined power source may be an electric motor configured to provide a drive torque and/or receive a drive torque. The combined power source may comprise an internal combustion engine and/or one or more electric motors.

The vehicle may comprise one or more control units 26 configured to control the torque generated by the first and/or second power sources 18, 19. The control unit(s) may be motor control units (MCUs). The control unit 26 may comprise a processor 27 and a non-volatile memory 28. The control unit 26 may be formed as part of a more general vehicle control unit. The control unit 26 may comprise more than one processor and more than one memory. The memory stores a set of program instructions that are executable by the processor, and reference data such as look-up tables that can be referenced by the processor in response to those instructions. The processor may be configured to operate in accordance with a computer program stored in non-transitory form on a machine-readable storage medium. The computer program may store instructions for causing the process to perform power source control operations in the manner described herein.

The rear wheels 3 may be drive wheels as shown in figure 1. As shown in figure 1, the rear wheels 3 are connected to a third power source 23 by a drive system 22 for the transference of torque from the third power source 23 to the rear wheels 3. The drive system 22 may comprise a plurality of drive shafts 24 to couple the third power source 23 to the rear wheels 3. The drive system 22 may comprise a differential 25. The differential 25 permits varying levels of torque to be provided to each of the rear wheels 3. The third power source 23 be an internal combustion engine, one or more electric motors or a combination of the two. The third power source 23 may include one or more gearboxes to adjust the running speed of the internal combustion engine and/or electric motors.

Although not pictured in figure 1, the rear wheels may be driven by separate power sources. For instance, one power source per wheel.

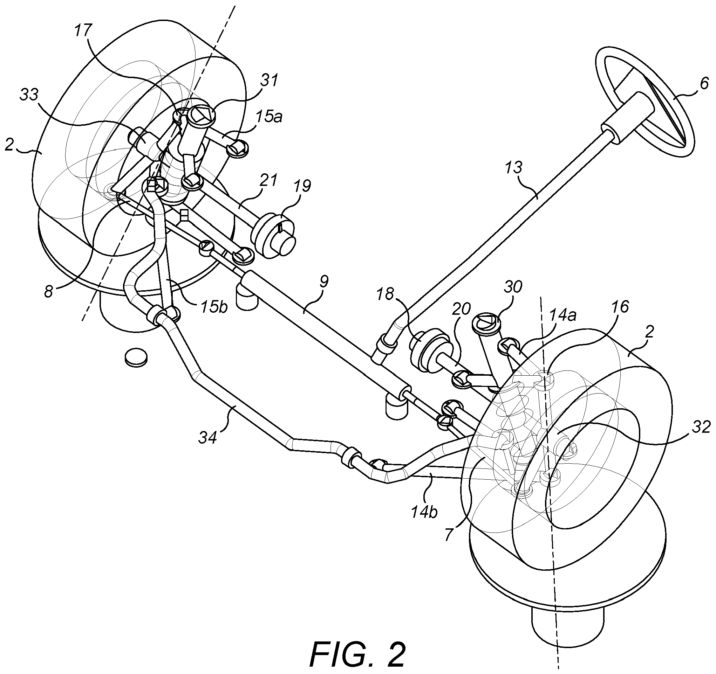

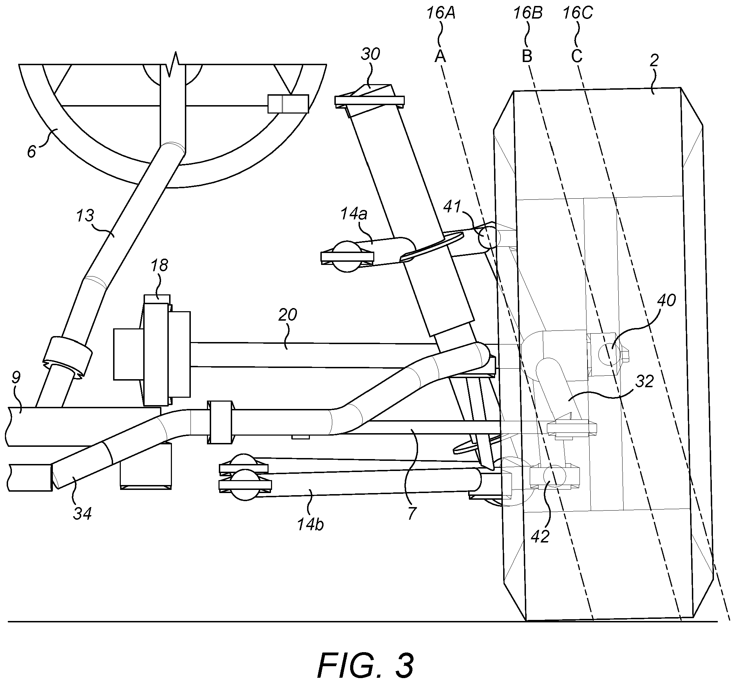

The configuration of the suspension systems and steerable wheels will be described in more detail with reference to figures 2 and 3.

Figure 2 shows a schematic view of a pair of steerable wheels of the vehicle. In the example shown in figure 2 these are labelled as front wheels 2. The body 12 of the vehicle 1 has been omitted for clarity. Figure 2 shows the wheels 2 being connected to the vehicle body 12 by respective suspension mechanisms 14, 15. In figure 2, the suspension mechanisms each comprise an upper wishbone 14a, 15a and a lower wishbone 14b, 15b together with a spring and/or damper 30, 31. The wishbones 14, 15 are connected between the vehicle body 12 and the hub carriers 32, 33. The upper 14a, 15a and lower wishbones 14b, 15b are mounted to the vehicle body 12 at different heights on the vehicle body 12. The steerable wheels 2 rotate about respective steer axes shown by the dotted line indicated at 16 and 17. Figure 2 shows a similar steering mechanism to that of figure 1. The steering attitude of the wheels 2 is controlled by track rods 7, 8. The steering mechanism is shown generally at 9 which is described as the rack body 9 in figure 1. Vehicle 1 may comprise an anti-roll mechanism shown generally at 34 which is connected between the suspension mechanisms to control the reaction of the suspension mechanisms to lateral forces on the vehicle body 12.

Figure 3 shows a front-on view of one side of the components shown in figure 2. Figure 3 is used to illustrate the relative positioning of the wheel, suspension mechanism and steer axis. Each wheel has a centre of mass which is indicated by the dot at 40 in figure 3. The centre of mass of the wheel may be calculated when the wheel is in an ideal configuration. E.g. using tyres of the correct size for the wheel rim, the tyres having a normal depth of tread and inflated to the recommended tyre pressure. The centre of mass can be taken as the hypothetical point at which the entire mass of the wheel is concentrated and thus the point through which forces generated by the wheel are taken as acting.

Three illustrative positions of steer axis 16 for the wheel are shown in figure 3. It will be appreciated that the position of the steer axis 16 can be adjusted by altering the position of the attachment points of the hub carrier 32 to the suspension mechanism 14. In this way the location of the steer axis 16 can be positioned relative to the centre of mass 40 of the wheel. It has been discovered that if a different amount of torque is applied to each of the steerable wheels 2 across the vehicle 1 then the position of the steer axis 16 can lead to a self-steering effect on the steerable wheels 2. This is due to asymmetry in the force applied to the respective wheels. I.e. one wheel generates more force whilst the other wheel generates less force. These forces act at the centre of mass 40 of the wheel 2 and so if the steer axis 16 is placed to one side of the centre of mass 40 of the wheel 2 then these forces generate a turning effect about the steer axis 16, 17 of the wheel 2. Under normal conditions the two steerable wheels are provided with the same torque and so any forces about the steer axes balance whereas when the torques differ the forces about the steer axes are imbalanced.

The steer axis in position B runs through the centre of mass 40 of the wheel. The pivot points of the hub carrier on the suspension mechanism are shown for position A as dots 41 and 42. In this position a difference in torque between the two steerable wheels 2 does not generate a turning effect about the steer axes 16, 17 of the wheels. This is because any force generated by the difference in torque in applied at the centre of mass of the wheel, which is on the steer axis, and so no turning moment is generated by this difference in force. Generally, the difference in torque used herein would not be sufficient to cause a change in direction of the vehicle in this situation (position B) by a torque vectoring effect between the two steerable wheels 2. If a much larger difference in torque were applied, then any change in direction of the vehicle in this situation (position B) may be due to a torque vectoring effect rather than by a steering effect about the respective steer axis of the two steerable wheels 2. It will be appreciated that due to friction present in the various components of the suspension mechanisms, steering system, wheel and hub carriers that there may be a band of positions either side of position B shown in figure 3 where no steering effect is generated due to the force generated by the torque difference being small.

The steer axis in position A is offset from the centre of mass 40 of the wheel 2 to the inboard side of the wheel 2. The inboard side being the side of the wheel 2 closest to a longitudinal centreline of the vehicle 2 or, stated differently, the side of the wheel 2 farthest from the outside edge of the vehicle 2. When the steer axis is offset in the direction shown by position A, a difference in torque between the two steerable wheels 2 causes each wheel to generate a force along the direction of travel of the wheel acting at the centre of mass 40 of the wheel. One wheel generates a positive force and one wheel generates a negative force depending on whether additional torque or subtractive torque respectively has been applied to the wheel. As the steer axis 16, 17 is offset from the centre of mass this force generates a steering effect about the respective steer axis 16, 17 causing the wheels to rotate about their respective steer axis. By offsetting the steer axis 16, 17 from the centre of mass of the wheel a steering effect can be achieved for a difference in deployed torque between the wheels.

Position A has the additional advantage that any alteration in the vehicle's direction due to torque vectoring between the two wheels acts in the same direction as the steering effect described above.

The steer axis in position C is offset from the centre of mass 40 of the wheel to the outboard side of the wheel 2. The outboard side being the side of the wheel 2 closest to the outside edge of the vehicle 2 or, stated differently, the side of the wheel 2 farthest from the longitudinal centreline of the vehicle 2. When the steer axis is offset in the direction shown by position C, a difference in torque between the two steerable wheels causes each wheel to generate a force along the direction of travel of the wheel acting at the centre of mass 40 of the wheel. One wheel generates a positive force and one wheel generates a negative force depending on whether additional torque or subtractive torque respectively has been applied to the wheel. As the steer axis 16, 17 is offset from the centre of mass this force generates a steering effect about the respective steer axis 16, 17 causing the wheels to rotate about their respective steer axis. By offsetting the steer axis 16, 17 from the centre of mass of the wheel a steering effect can be achieved for a difference in deployed torque between the wheels.

In position C, the turning effect about the steer axis is in the opposite direction to that in position A. This is because the centre of mass 40 is located to the other side of the centre of mass 40 and so the forces generated by the two wheels act in the opposite direction for the same difference in torque to that in position A. This causes a counter-steering effect relative to any alteration in the vehicle's direction due to torque vectoring between the two wheels.

It will be appreciated that there are a range of positions to each side of position B where the steer axis for the wheel can be set and arrive at the steering effect described herein. As described herein, as positions A and C approach position B the forces generated by the wheels when subjected to different levels of torque may be insufficient to overcome the frictional forces in the system. Therefore, there will be a band of positions about position B in which the difference in torque between the two wheels required to generate a steering force would be too large to be practical. This means that in a practical implementation the steering axis may be offset from the centre of mass 40 of the wheel 2 by an amount that causes a steering torque and thus steering movement about the steering axis 16, 17.

The position of the steer axes are described as being offset in a lateral direction of the vehicle from the centre of mass 40 of the wheel. It will be appreciated that the steer axis may also be positioned in front of or behind the centre of mass 40 of the wheel as wheel as being offset in the lateral direction. Whilst only one wheel is shown in figure 3 it will be appreciated that the wheel on the other side of the vehicle 2 will be configured similarly to generate the turning effect about the steer axis. The lateral direction of the vehicle being a line that runs across the vehicle from one side to the other and is perpendicular to the longitudinal centreline of the vehicle.

The power sources 18, 19 may be controlled to generate the difference in torque between the two steerable wheels 2. The control unit(s) 26 may be configured to control the torque generated by the power sources 18, 19 to cause a difference in torque to be generated by the two power sources 18,19 and thus applied to the two steerable wheels 2. As described herein, the power sources 18, 19 may be electric motors. For a desired steering direction, one power source may be controlled to generate a higher torque and one power source may be controlled to generate a lower torque.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

### ANNEX TO THE DESCRIPTION

1. A vehicle comprising:
   a body;
   a pair of wheels each rotatable about a respective rolling axis and each wheel having a centre of mass; and
   a pair of suspension mechanisms, each wheel being attached to the body of the vehicle by a respective suspension mechanism, the suspension mechanism providing the respective wheel with freedom to move relative to the body of the vehicle in steer about a respective steer axis, the steer axis being offset from the centre of mass of the wheel so that when a different amount of torque is applied to each wheel about the rolling axis the difference in torque causes a steering torque on each wheel about the steer axis of the wheel.
2. A vehicle according to 1, wherein the steer axis is offset from the centre of mass of the wheel in a lateral direction of the vehicle.
3. A vehicle according to 2, wherein the steer axis of each wheel is offset from the centre of mass of the wheel in the lateral direction of the vehicle towards a longitudinal centreline of the vehicle.
4. A vehicle according to 2, wherein the steer axis of each wheel is offset from the centre of mass of the wheel in the lateral direction of the vehicle away from a longitudinal centreline of the vehicle.
5. A vehicle according to any of 1 to 4, the vehicle comprising a first power source coupled to a first of the pair of wheels and a second power source coupled to a second of the pair of wheels, wherein the power sources are coupled to respective wheels to provide torque to that wheel about the respective rolling axis.
6. A vehicle according to 5, the vehicle comprising at least one power source control unit configured to control the torque generated by the first and second power sources, the control unit being configured to cause the first and second power sources to deliver different amounts of torque to each of the pair of wheels to cause the steering torque on each wheel.
7. A vehicle according to 6, wherein the power source control unit(s) are configured to cause the first power source to generate a greater torque than the second power source to cause the pair of wheels to rotate about the steer axis in a first direction.
8. A vehicle according to 6 or 7, wherein the power source control unit(s) are configured to cause the second power source to generate a greater torque than the first power source to cause the wheels to cause the pair of wheels to rotate about the steer axis in a second direction opposite to the first direction.
9. A vehicle according to any of 1 to 8, the vehicle comprising a steering mechanism, wherein the pair of wheels are coupled together by the steering mechanism, the steering mechanism linking the movement of the pair of wheels about the steer axes of the wheels.
10. A vehicle according to any of 1 to 9, the pair of wheels being located on opposite sides of the vehicle body along a lateral direction of the vehicle.
11. A vehicle according to any of 1 to 10, wherein the pair of wheels are front wheels of the vehicle.

## Claims

1. A vehicle comprising:
a body;
a pair of wheels each rotatable about a respective rolling axis and each wheel having a centre of mass;
a first power source coupled to a first of the pair of wheels and a second power source coupled to a second of the pair of wheels, the power sources being coupled to respective wheels to provide torque to that wheel about the respective rolling axis; and
a pair of suspension mechanisms, each wheel being attached to the body of the vehicle by a respective suspension mechanism, the suspension mechanism providing the respective wheel with freedom to move relative to the body of the vehicle in steer about a respective steer axis, the steer axis being offset from the centre of mass of the wheel so that when a different amount of torque is applied to each wheel about the rolling axis the difference in torque causes a steering torque on each wheel about the steer axis of the wheel.

2. A vehicle according to claim 1, wherein the steer axis is offset from the centre of mass of the wheel in a lateral direction of the vehicle.

3. A vehicle according to claim 2, wherein the steer axis of each wheel is offset from the centre of mass of the wheel in the lateral direction of the vehicle towards a longitudinal centreline of the vehicle.

4. A vehicle according to claim 2, wherein the steer axis of each wheel is offset from the centre of mass of the wheel in the lateral direction of the vehicle away from a longitudinal centreline of the vehicle.

5. A vehicle according to claim 1, the vehicle comprising at least one power source control unit configured to control the torque generated by the first and second power sources, the control unit being configured to cause the first and second power sources to deliver different amounts of torque to each of the pair of wheels to cause the steering torque on each wheel.

6. A vehicle according to claim 5, wherein the power source control unit(s) are configured to cause the first power source to generate a greater torque than the second power source to cause the pair of wheels to rotate about the steer axis in a first direction.

7. A vehicle according to claim 5 or 6, wherein the power source control unit(s) are configured to cause the second power source to generate a greater torque than the first power source to cause the wheels to cause the pair of wheels to rotate about the steer axis in a second direction opposite to the first direction.

8. A vehicle according to any preceding claim, the vehicle comprising a steering mechanism, wherein the pair of wheels are coupled together by the steering mechanism, the steering mechanism linking the movement of the pair of wheels about the steer axes of the wheels.

9. A vehicle according to any preceding claim, the pair of wheels being located on opposite sides of the vehicle body along a lateral direction of the vehicle.

10. A vehicle according to any preceding claim, wherein the pair of wheels are front wheels of the vehicle.

11. A vehicle according to any preceding claim, wherein the first and second power sources are one combined power source that comprises a gearing system to provide two separate drive outputs that form the first and second power sources.

12. A vehicle according to claim 11, wherein the gearing system is capable of providing different torques to each of the drive outputs.
